(19) Europäisches Patentamt
European Patent Office
Office européen des brevets

(11) Numéro de publication: **0 231 691 B1**

(12) **FASCICULE DE BREVET EUROPEEN**

(45) Date de publication de fascicule du brevet: **01.04.92**

(51) Int. Cl.5: **C03C 4/00**, C05B 17/02, C03C 3/097, C03C 3/066

(21) Numéro de dépôt: **86402799.0**

(22) Date de dépôt: **15.12.86**

(54) **Verres nutritifs pour l'agriculture.**

(30) Priorité: **17.12.85 FR 8518672**

(43) Date de publication de la demande:
**12.08.87 Bulletin 87/33**

(45) Mention de la délivrance du brevet:
**01.04.92 Bulletin 92/14**

(84) Etats contractants désignés:
**BE DE ES FR GB IT LU NL SE**

(56) Documents cités:
**FR-A- 1 072 587**

**CHEMICAL ABSTRACTS, vol. 101, no. 24, décembre 1984, page 248, résumé no. 215413b, Columbus, Ohio, US; & SU-A-1 112 009 (STATE SCIENTIFIC-RESEARCH INSTITUTE OF GLASS; STATE SCIENTIFIC-RESEARCH INSTITUTE OF MINED CHEMICAL RAW MATERIALS) 07-09-1984**

(73) Titulaire: **ISOVER SAINT-GOBAIN**
**Les Miroirs 18, avenue d'Alsace**
**F-92400 Courbevoie(FR)**

(72) Inventeur: **Meunier, Jean-Paul**
**Croix de Creil Breuil Le Vert**
**F-60600 Clermont(FR)**
Inventeur: **Blanc, Denise**
**Villa Sarazis Chemin de la Constance**
**F-06600 Antibes(FR)**
Inventeur: **Matzen, Guy**
**165 Rue Championnet**
**F-75018 Paris(FR)**
Inventeur: **Montarone, Maryse**
**Montée Clément**
**F-06000 Nice(FR)**

(74) Mandataire: **Muller, René et al**
**SAINT-GOBAIN RECHERCHE 39, quai Lucien Lefranc**
**F-93304 Aubervilliers(FR)**

**EP 0 231 691 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne de nouvelles compositions verrières pour la fabrication de matériaux destinés à être utilisés dans le domaine de la culture hors-sol. Plus particulièrement, elle concerne des produits vitreux destinés à la nutrition végétale, notamment des fibres de verre.

Il est possible de faire entrer dans des compositions de verre une très grande variété d'éléments et les applications les plus variées ont pu être envisagées.

Le choix des compositions est, d'une façon générale, fonction d'un compromis entre plusieurs exigences souvent contradictoires : le coût des différentes matières premières, les contraintes imposées par les dispositifs de mise en oeuvre des procédés de fabrication et les propriétés souhaitées.

Dans le domaine de l'agriculture et notamment celui de la nutrition végétale, les compositions de verre, par leur capacité d'échange avec le milieu avec lequel elles sont en contact, trouvent une application privilégiée.

Les plantes ont en effet besoin, pour leur croissance, d'un grand nombre d'éléments minéraux qui, pour la plupart, peuvent entrer dans une composition de verre. Suivant la teneur de la plante en chacun de ces éléments, on les classe généralement en deux catégories : les macro-éléments ou éléments majeurs N, P, K, S, Ca, Mg et les oligoéléments ou éléments mineurs indispensables également, mais en moindre quantité : Fe, Mn, Zn, B, Cu, Mo. C'est dans le sol, par ses racines, que la plante puise normalement les éléments nécessaires à sa croissance. Mais tous les sols n'ont pas les propriétés convenant pour une nutrition satisfaisante des plantes. Certains sont trop pauvres ou totalement dépourvus d'éléments indispensables au développement des plantes. D'autres contiennent effectivement ces éléments, mais le transfert à la plante ne s'effectue pas correctement dans les proportions nécessaires à une croissance satisfaisante.

Pour que les conditions d'un transfert efficace soient effectivement réunies, il faut en effet que l'élément nutritif soit susceptible de se solubiliser dans la phase liquide du milieu de culture, seul l'élément en solution pouvant être assimilé par la plante. Mais cette solubilité doit également être contrôlée et se produire au fur et à mesure de l'absorption des éléments concernés par le végétal et donc, au fur et à mesure des besoins du végétal. Sinon, les éléments effectivement libérés sont entraînés par drainage, ou encore réagissent chimiquement avec le sol, mais ne sont pas assimilés par la plante.

On a donc développé des moyens, soit pour enrichir le sol en éléments indispensables à la plante, soit pour améliorer l'aptitude des plantes à assimiler lesdits éléments.

On a également fortement développé la pratique de la culture hors-sol. Selon cette technique, on utilise des substrats variés qui maintiennent les racines des plantes et sont alimentés en une solution nutritive qui contient les éléments nécessaires à la croissance des plantes. Le choix des éléments et de leurs proportions dans la solution nutritive est fonction des besoins de la plante. Le choix de la nature du substrat est, quant à lui, fonction de ses qualités pour faciliter la culture. Parmi toutes les qualités requises, on peut citer l'absence d'éléments toxiques pour les plantes, l'absence d'éléments pathogènes, une bonne résistance à la dégradation et au tassement.

Du fait que le substrat constitue alors l'unique milieu de développement du système racinaire, certaines caractéristiques physiques sont également requises : ce sont notamment une bonne capacité de rétention de l'eau, qui permet de doser le rythme des arrosages ; une capacité d'aération du milieu racinaire, conditionnée par la densité du substrat. Le substrat doit également assurer une bonne circulation de la solution nutritive.

Des produits vitreux tels que des fibres et des poudres de verre destinés à être appliqués dans le domaine de l'agriculture sont connus. Par exemple, le brevet US 2 192 839 décrit des fibres de verre conditionnées sous la forme d'un matelas de fibres disposé sur le sol avant de l'ensemencer. Les fibres décrites dans ce document renferment des éléments connus pour leurs propriétés fertilisantes, facilement solubles, et introduites en quantités convenant pour enrichir le sol. Les compositions de verre choisies fournissent pour l'essentiel du phosphore et du potassium. La fonction qu'elles remplissent est multiple et toujours en association avec le sol : enrichissement ou protection du sol. La croissance des plantes est ainsi assurée par l'apport combiné du sol et du matelas de fibres.

On connaît également, par la publication de brevet allemand DE-AS-1 008 757 des poudres de verre obtenues par fusion de la composition puis refroidissement brusque à l'eau suivi d'une opération de séchage et de tamisage. Ces poudres de verre peuvent servir directement de support nutritif et rendre certains éléments nutritifs directement accessibles aux racines. Malgré la présence d'un ou de plusieurs éléments nutritifs dans ce produit, il est alimenté en une solution qui contient elle-même un ou plusieurs éléments nutritifs. Avec un tel système, la croissance est réalisée par l'apport combiné du support et de la solution nutritive.

Le brevet français FR 1 072 587 décrit une composition vitreuse sous forme de calcin qui contient du

fer et de minimes quantités de substances choisies dans le groupe formé par des composés minéraux de manganèse, du cuivre, du bore, du cobalt et du molybdène, utilisés pour la nutrition des plantes.

L'invention vise à fournir un milieu nutritif de culture hors-sol, c'est-à-dire un milieu qui combine les fonctions de nutrition et de maintien du système racinaire des végétaux.

Sous cet aspect, elle vise à simplifier le travail de l'horticulteur. En effet, dans la mise en oeuvre la plus courant d'un procédé de culture hors-sol tel que décrit précédemment, sur substrat inerte au plan agronomique, les éléments essentiels aux plantes sont apportés par la solution nutritive qui doit alors les contenir tous. Mais du fait de la multiplicité des éléments, la préparation d'une telle solution exige un certain nombre de précautions qui prennent du temps. Notamment, pour éviter la formation de précipités, il faut préparer séparément plusieurs solutions contenant chacune un nombre limité d'éléments, et les utiliser tout de suite. A cet égard, un des buts de l'invention est de se passer de solution nutritive. L'art antérieur précédemment cité n'élimine pas cet inconvénient, dans la mesure où l'emploi d'une solution nutritive plus ou moins complexe est toujours prévu.

Un autre but de l'invention est de permettre la croissance des végétaux dans un milieu de culture indépendant du sol, sans apport nutritif extérieur autre que l'azote.

Pour atteindre ces buts, l'invention a pour objet un substrat pour culture hors-sol constitué par un feutre formé de fibres de verre. Celles-ci sont liées entre elles par un liant organique.

Le substrat selon l'invention peut constituer, à lui seul, une source complète, azote excepté, convenant à la croissance et à la nutrition des végétaux ; il renferme, à l'exception de l'azote, tous les éléments minéraux majeurs et mineurs essentiels à la nutrition des végétaux et susceptibles d'être prélevés par son système racinaire dans le milieu ambiant. Les quantités et proportions des constituants intervenant dans l'élaboration de ces produits sont choisies de façon à ce que les éléments nutritifs soient solubles et assimilables par les végétaux.

Le substrat selon l'invention est constitué d'un feutre de fibres de verre dont la composition pondérale (déterminée par analyse chimique sur le verre) est :

| | | | | | | | | | |
|---|---|---|---|---|---|---|---|---|---|
| $SiO_2$ | 25 | à | 65 % | | $Fe_2O_3$ | 1 | à | 15 % |
| $P_2O_5$ | 1 | à | 15 % | | $B_2O_3$ | 0,01 | à | 2 % |
| $K_2O$ | 5 | à | 35 % | | $MnO$ | 0,01 | à | 3 % |
| $Na_2O$ | 0 | à | 2 % | | $ZnO$ | 0,01 | à | 3 % |
| $CaO$ | 11 | à | 35 % | | $CuO$ | 0,01 | à | 2 % |
| $MgO$ | 1 | à | 10 % | | $MoO_3$ | 0,01 | à | 3 % |
| $SO_3$ | 0,01 | à | 1 % | | $Al_2O_3$ | 0 | à | 25 % |

Le substrat selon l'invention renferme en tant qu'éléments minéraux majeurs P, K, Ca, Mg, S, en tant qu'éléments minéraux mineurs Fe, B, Mn, Zn, Cu, Mo apportés par les oxydes suivants : $P_2O_5$, $K_2O$, CaO, MgO, $SO_3$, $Fe_2O_3$, $B_2O_3$, MnO, ZnO, CuO, $MoO_3$ ainsi que de la silice. La silice sert de base à la matrice vitreuse.

Les proportions des divers constituants sont, bien entendu, choisies de façon à retrouver dans les plantes les éléments nécessaires dans les proportions adéquates. A titre indicatif, on peut rappeler les teneurs en éléments minéraux dans les végétaux entiers : azote, phosphore, potassium, calcium et magnésium sont généralement présents dans le végétal à des taux supérieurs à 1 mg par gramme de matière sèche. Pour 100 parts de matière sèche, on trouve de 1 à 5 parts d'azote et de potassium, de 1 à 4 parts de calcium ; soufre, magnésium et phosphore sont à des teneurs inférieures à 1 part. En ce qui concerne les éléments mineurs, ou oligoéléments, fer, bore et manganèse représentent quelques centaines de microgrammes (ppm), zinc et cuivre quelques dizaines de microgrammes et le molybdène est le plus souvent inférieur au microgramme.

On a, par ailleurs, constaté que par addition d'alumine, il était possible de contrôler la cinétique de dissolution des éléments nutritifs sous l'action de l'eau, pour l'adapter aux besoins des plantes. Ce constituant, qui n'est pas nécessaire à la nutrition, est, suivant une caractéristique avantageuse de l'invention, présent dans la composition à une teneur pondérale inférieure à 7 %.

Certaines plantes absorbent le sodium, quoique son rôle exact n'ait pu encore être mis en évidence. Les produits de l'invention comprennent avantageusement $Na_2O$. Ce constituant a également un effet bénéfique sur l'élaboration du verre.

Les compositions suivantes sont particulièrement adaptées aux buts de l'invention. Elles renferment les constituants suivants, pris dans les proportions pondérales ci-après :

| | | | | | | | |
|---|---|---|---|---|---|---|---|
| $SiO_2$ | 40 | à 55 | % | $Fe_2O_3$ | 2 | à 5 | % |
| $P_2O_5$ | 5 | à 8 | % | $B_2O_3$ | 0,1 | à 0,3 | % |
| $K_2O$ | 15 | à 20 | % | MnO | 0,1 | à 0,3 | % |
| $Na_2O$ | 0,1 | à 0,5 | % | ZnO | 0,1 | à 0,3 | % |
| CaO | 13 | à 18 | % | CuO | 0,1 | à 0,2 | % |
| MgO | 4 | à 7 | % | $MoO_3$ | 0,05 | à 0,1 | % |
| $SO_3$ | 0,1 | à 0,3 | % | $Al_2O_3$ | | < 7 | % |

Dans le cadre de l'invention, les fibres de verre peuvent être préparées par tous les procédés connus de fabrication des fibres de verre. Un mode de préparation usuel consiste à former les fibres par passage de la composition de verre fondue dans une filière centrifuge. Cependant les compositions de verre choisies dans le cadre de l'invention ont une température de fibrage assez élevée, de l'ordre de 1400 ° C. Un mode de préparation particulièrement avantageux est, par exemple, celui décrit dans le brevet français 2 374 440. Selon ce procédé, les fibres sont obtenues à partir d'une filière statique par étirage au moyen de courants gazeux qui interagissent de façon à former des tourbillons réguliers.

L'un des avantages procurés par la mise en oeuvre des produits de l'invention sous forme de fibres réside dans la possibilité de jouer sur la dimension des fibres, afin d'obtenir une surface spécifique appropriée. Il est en effet connu que l'attaque chimique du verre est d'autant plus rapide qu'il se présente sous une forme possédant une surface spécifique plus grande. La vitesse de mise en solution des éléments peut être également contrôlée par ce moyen. Les conditions ne sont toutefois pas identiques pour les fibres et pour les poudres.

Dans le cas des fibres, le mode de préparation permet à la fois d'obtenir une surface spécifique homogène en tous points de la surface fibreuse, et une maîtrise de la valeur de cette surface spécifique par la maîtrise du diamètre des fibres. Du fait que les fibres sont généralement obtenues par passage dans une filière, le réglage du dispositif permet de fixer préalablement le diamètre des fibres produites. Dans le cas des fibres, la fonction de nutrition est donc facilitée par rapport aux poudres.

Par ailleurs, la fonction de maintien du système racinaire de la plante est également facilitée. La mise en oeuvre des compositions de verre sous forme de fibres favorise un enchevêtrement des racines et des fibres.

Enfin la capacité de rétention d'eau est accrue pour les fibres par rapport aux poudres.

Les considérations précédentes font qu'un mode préféré de réalisation de l'invention consiste à mettre en oeuvre les compositions de verre sous forme de fibres. De préférence, ces fibres auront un diamètre compris entre 3 et 9 micromètres ce qui correspond à une surface spécifique de l'ordre de 0,3 $m^2/g$.

La surface spécifique S est reliée au diamètre d par la formule suivante :

$S = 4/(\rho\ d)$, où $\rho$ désigne la masse volumique égale à 2500 $kg/m^3$,

soit $S = 1{,}6/(\rho\ d)$, où d est exprimé en micromètres.

Il est beaucoup plus difficile d'élaborer des poudres de verre dont les dimensions sont telles que la surface spécifique atteigne ces valeurs.

Les feutres de fibres minérales sont ordinairement liés au moyen de liants organiques tels que les résines phénoplastes, ou aminoplastes. Dans le cadre de l'invention, la liaison des fibres constitue une caractéristique avantageuse. La présence d'un liant organique accroît en effet la tenue des fibres, évite leur tassement, notamment sous l'action de l'eau, et favorise donc leur fonction de maintien des racines des végétaux. On utilisera comme liant des résines phénoplastes et/ou aminoplastes à raison de 2 à 15 % et, de préférence, de 3 à 6 % en poids de fibres. A ces taux, les résines sont sans influence sensible sur la culture elle-même.

L'invention a pour objet un substrat de culture hors-sol comprenant les produits vitreux définis précédemment. Toutes les combinaisons peuvent être envisagées, dans la mesure où les fonctions de nutrition et de maintien des racines des plantes sont effectivement remplies.

Les produits vitreux précédemment définis peuvent, par exemple, être utilisés en tant que substrat de culture hors-sol avec des matériaux inertes sur le plan agronomique. Jusqu'à présent, la culture hors-sol a en effet déjà conduit à l'utilisation de substrats de nature variée : des produits minéraux naturels tels que

les graviers et pouzzolanes, des produits minéraux traités tels que les perlites expansées ou les laines de roche, ou encore des produits fibreux d'origine végétale tels que les tourbes. Tous ces matériaux peuvent être utilisés en combinaison avec les produits de l'invention. On peut également envisager un substrat qui comprend des produits selon l'invention, mêlés à des fibres de verre inertes sur le plan agronomique.

L'invention concerne aussi un procédé de croissance végétale selon lequel on alimente en azote un substrat tel que défini précédemment. L'alimentation en azote peut se faire par différentes moyens. Une technique qui convient particulièrement bien est la technique dite de subirrigation. Selon cette technique, une solution aqueuse azotée humidifie le milieu de culture par capillarité. Un tel procédé d'alimentation est particulièrement avantageux pour l'élevage de jeunes plants. Dans ce cas, en effet, la fourniture d'éléments minéraux doit être rapide et suffisante. Il faut éviter toutefois que la forte solubilité des éléments n'entraîne un lessivage incontrôlé sous l'action de l'eau avec des pertes d'éléments trop importantes. On a constaté que, par l'emploi de la subirrigation, ces inconvénients étaient évités.

Lorsque le substrat libère les éléments nutritifs, le milieu tend à devenir alcalin et une alcalinisation excessive du milieu constitue un inconvénient. C'est pourquoi on utilise de préférence une solution aqueuse azotée dont le pH est acide, de préférence compris entre 2 et 4, de façon à ramener le pH du milieu en dessous de 7. L'acidité peut être apportée par des acides forts, parmi lesquels on peut citer l'acide sulfurique ou l'acide nitrique. L'acide sulfurique est avantageux dans la mesure où il fournit simultanément un supplément de soufre. L'acide nitrique est également avantageux dans la mesure où il apporte simultanément l'acidité et l'azote nécessaires.

D'autres caractéristiques et avantages de l'invention apparaitront au cours de la description suivante d'exemples de réalisation. Les exemples concernent des fibres de verre préparées selon le procédé décrit dans le brevet français 2 374 440 déjà cité. Elles ont un diamètre de 6 micromètres environ, ce qui correspond à une surface spécifique de 0,26 $m^2/g$.

Pour mettre en évidence la capacité à nourrir la plante des fibres de verre ainsi préparées, la demanderesse a défini une technique analytique représentative de la capacité d'assimilation des éléments par la plante.

Le tableau 1 en annexe indique les compositions correspondant aux différents exemples. Les proportions des différents éléments sont indiquées en pourcentages pondéraux.

Pour les exemples 1 et 2, on a par ailleurs pu procéder à une série d'essais culturaux permettant notamment de mettre directement en évidence l'assimilation par les plantes des éléments minéraux indispensables.

Les résultats obtenus seront comparés à ceux obtenus avec un substrat témoin comprenant uniquement du sable.

Témoin 1 :

2,5 kg de sable sont alimentés avec une solution nutritive complète, c'est-à-dire comprenant tous les éléments nécessaires au développement de la plante. Le sable présente une granulométrie de l'ordre de 1 à 2 mm. Il est placé dans un pot réserve d'eau du type riviera, et se trouve en contact permanent avec 2 cm de solution nutritive, présente au fond du conteneur et réapprovisionnée selon les besoins.

L'essai est réalisé avec une espèce dont la production hors sol se développe considérablement : le concombre. La variété utilisée est le concombre "vert long des maraichers". La culture est conduite du semis au stade plantation défini par les producteurs, à savoir six feuilles environ bien développées.

La préparation du milieu de culture se fait de la façon suivante : on sème trois graines et on interrompt l'expérience au bout de 36 jours environ, ce qui correspond au stade plantation défini par les producteurs.

La solution nutritive a la composition suivante, 1 me correspondant à 1 ml d'une solution normale :

- nitrate de potassium 3 me/l
- phosphate de potassium 2 me/l
- nitrate de calcium 8 me/l
- sulfate de magnésium 2 me/l
- acide nitrique 4 me/l
- Fe 800 µg/l
- Mn 200 µg/l
- Zn 200 µg/l
- B 100 µg/l
- Cu 50 µg/l
- Mo 50 µg/l

Les résultats observés concernent d'une part le développement végétatif du plant, d'autre part sa

composition minérale.

| Développement végétatif : | | | | | | |
|---|---|---|---|---|---|---|
| Témoin 1 | poids frais g | poids sec g | poids feuilles g | poids tiges g | nombre feuilles | longueur totale cm |
| | 43,19 | 3,72 | 21,01 | 22,18 | 9,3 | 41,35 |

Analyse minérale :

Elle porte sur les teneurs en éléments majeurs : K, Ca, Mg, P, exprimées en pourcentage de matière sèche, et sur les teneurs en éléments mineurs Fe, Zn, Mn, B, Cu, Mo, exprimées en parties par million (ppm).

Le dosage des différents éléments présents dans l'échantillon végétal obtenu demande une préparation homogène de l'échantillon, afin d'obtenir des bases de comparaison convenables d'un exemple à l'autre. On procède de la façon suivante : l'échantillon végétal est pesé frais, puis stabilisé par séchage rapide aux infrarouges à une température comprise entre 80 et 90 ° C, afin d'éviter toute évolution de produits instables. Le séchage est poursuivi à une température plus basse, de l'ordre de 70 ° C, jusqu'à poids constant. Le végétal est alors homogénéisé par broyage. La mouture est la plus fine possible de façon à disposer d'une prise d'essai représentative de l'échantillon.

Le dosage des éléments se fait sur la poudre végétale minéralisée. La préparation de l'échantillon se fait de la façon suivatte : on pèse exactement 0,5, 1 ou 2 g de poudre végétale que l'on calcine au four à mouffle à 500 - 550 ° C dans une capsule de quartz, ou de platine pour le dosage des oligo-éléments. On ajoute 5 ml d'HCl pur puis on chauffe au bain de sable jusqu'à obtenir un produit sec. On ajoute 5 ml d'eau déminéralisée et on chauffe de nouveau au bain de sable pour obtenir un produit sec. On maintient une heure au bain de sable, on ajoute 5 ml d'une solution aqueuse à 10 % de HCl, puis on filtre immédiatement sur un ballon jaugé de 100 ml. On lave à l'eau chaude et on complète le ballon à l'eau à 100 ml après refroidissement.

Tous les éléments sont dosés à partir de cette préparation. K et Na sont dosés par photométrie de flamme, Ca et Mg par absorption atomique, P205 par colorimétrie au vanadate, éventuellement après une hydrolyse, Fe, Mn et Cu par colorimétrie ou absorption atomique.

Les résultats correspondants aux exemples témoin 1, 1, témoin 2 et 2 sont regroupés dans le tableau 2 en annexe.

EXEMPLE 1

Le milieu de culture est constitué cette fois de 1500 g de sable mélange à 10 g de fibres dont la composition est indiquée dans le tableau 1 en annexe :

Il est alimenté par subirrigation à l'aide d'une solution aqueuse d'acide nitrique dont le pH est environ 2. Cette solution a l'avantage d'apporter à l'aide d'un seul composé, l'acidité convenable et l'azote nécessaire. Lors de la mise en solution des éléments, le milieu tend en effet à devenir alcalin. L'analyse des feuilles de concombre montre que tous les éléments présents dans les fibres et nécessaires à la plante ont effectivement été assimilés. Toutefois, certains éléments sont, par rapport au témoin 1, assimilés de façon excédentaire, ce qui risque de conduire à une toxicité pour le concombre.

Par rapport au témoin 1, on constate notamment un excédent de molybdène, de bore et de manganèse.

Développement végétatif :

| | poids frais g | poids sec g | poids feuilles g | poids tiges g | nombre feuilles | longueur totale cm |
|---|---|---|---|---|---|---|
| Exemp. 1 | 9,12 | 0,86 | 4,49 | 4,63 | 5,6 | 17,87 |

Le plant de concombre s'est donc développé dans des conditions qui ne sont pas encore optimisées.

Témoin 2 et Exemple 2 :

Les analyses minérales pratiquées sur les exemples témoin 2 et 2 (voir tableau 2) résultent de cultures de Ray Grass d'Italie. Cette plante test est une graminée pérenne dont les repousses successives permettent d'apprécier l'évolution dans le temps de l'assimilation de l'élément étudié. Le semis de Ray Grass est représenté par 1 g de graines (340 unités environ) réparties sur une surface de 156 $cm^2$. L'irrigation est faite à l'eau déminéralisée jusqu'à la levée. En fin de culture, on procède à l'analyse minérale de la plante. Entre le semis et la levée se sont écoulés neuf jours, tandis que la fin de la culture a été fixée à trois mois environ après la levée.

Le sable utilisé est siliceux (dépourvu de calcaire) à grains ronds de diamètre défini compris entre 1 mm et 3 mm et de faible capacité de rétention pour l'eau.

Témoin 2 :

Il s'agit de 2,5 kg de sable alimenté par une solution nutritive complète dont la composition est la suivante :

- nitrate de potassium 3 me/l (un me correspond à 1 ml d'une solution normale de sel),
- nitrate de calcium 8 me/l
- phosphate de potassium 2 me/l
- sulfate de magnésium 2 me/l

ainsi qu'une solution d'oligo-éléments de manière à obtenir 800 µg/l de fer, 200 µg/l de manganèse, 200 µg/l de zinc, 100 µg/l de bore, 50 µg/l de cuivre, 50 µg/l de molybdène.

EXEMPLE 2.

Le milieu de culture est représenté par 7,5 g de fibres pour 2,5 kg de sable. La composition des fibres est indiquée dans le tableau 1 en annexe.

La solution aqueuse utilisée est une solution de nitrate d'ammonium acidifiée à 5,5 me/l.

La composition des fibres de verre se différencie de celle de l'exemple 1 essentiellement par un accroissement de la teneur en alumine, et un abaissement de la teneur en certains oligo-éléments, notamment molybdène. Cet exemple met en évidence l'influence du taux d'alumine sur la capacité d'assimilation du potassium et du phosphore par la plante puisque, par rapport au témoin 2 (voir tableau 2), l'exemple 2 témoigne d'un abaissement de la teneur en ces deux éléments dans la plante. Cet abaissement n'apparait pas dans l'exemple 1 par rapport au témoigne 1.

EXEMPLE 3.

Le milieu de culture est cette fois constitué par un cube de fibres dont la composition est indiquée dans le tableau 1 en annexe. Ces fibres sont liées à l'aide d'un liant phénoplaste, à raison de 4 % en poids des fibres et elles ont un diamètre de 6 micromètres. Le cube formé a une densité de 32 $kg/m^3$, et les dimensions suivantes: 100 mm x 100 mm x 60 mm.

Dans le cadre de cet exemple, ainsi que pour les deux exemples suivants, on a semé des graines de concombre dans les même conditions que dans l'exemple 1. La solution qui alimente le substrat est une solution d'acide nitrique dont le pH est 2. On a étudié la capacité d'assimilation des éléments nutritifs par la plante d'après le test chimique du suivi de la cinétique d'extraction par l'acétate d'ammonium, mis au point par la demanderesse.

L'expérience a été menée de la façon suivante : 1 g de produit est agité avec 50 ml d'acétate d'ammonium à pH7 pendant des temps variables, six fois une heure puis une fois six heures. Les valeurs cumulées des principaux éléments extraits sont indiquées ci-dessous :

| g/kg | | | | | mg/kg | |
|---|---|---|---|---|---|---|
| pH | $P_2O_5$ | $K_2O$ | CaO | MgO | $Fe_2O_3$ | MnO |
| 8,02 | 3,78 | 1,91 | 4,73 | 0,63 | 20,5 | 9,2 |

La composition (conformément tableau 1) se caractérise essentiellement par une très faible valeur en alumine, qui est reliée à une cinétique d'extraction des différents éléments rapide en comparaison des

exemples suivants. Une extraction rapide, qui favorise une assimilation rapide des éléments par les plantes est particulièrement avantageuse dans les cas où il n'y a pas de risque de perte par drainage. C'est notamment le cas lorsqu'on emploie la technique de subirrigation pour alimenter un substrat nutritif.

EXEMPLE 4.

Par rapport à l'exemple 3, cet exemple se caractérisé essentiellement par une teneur fortement accrue en alumine. Cette différence se traduit de la façon suivante quant à la cinétique d'extraction.

| g/kg | | | | | mg/kg | |
|---|---|---|---|---|---|---|
| pH | $P_2O_5$ | $K_2O$ | CaO | MgO | $Fe_2O_3$ | MnO |
| 7,37 | 0,55 | 0,91 | 3,79 | 0,35 | 19,9 | 7,7 |

Il apparait donc un ralentissement considérable de la cinétique d'extraction, notamment pour le potassium et le phosphore. Une telle propriété permet d'envisager une application spécifique d'un tel matériau : il peut être utilisé comme engrais retard, de sorte que sa faible solubilité est mise à profit. Ces matériaux étant peu solubles, les ions sont libérés plus progressivement et la plante les utilise alors au fur et à mesure de ses besoins. Dans une telle application, ils sont nécessairement associés à des sols ou à des substrats pauvres en éléments nutritifs, pour lesquels ils servent de source d'appoint en éléments nutritifs. Ils risquent, dans une telle application, d'être soumis à des lessivages non contrôlés plus ou moins importants. La faible solubilité des éléments est donc ici un avantage puisqu'elle permet d'éviter des pertes d'éléments trop importantes. Au contraire, dans le cadre principal de l'invention, à savoir une application des produits vitreux comme substrat nutritif, on choisira avantageusement des teneurs en alumine plus faibles.

EXEMPLE 5.

Il se caractérise par une teneur en alumine intermédiaire entre celle de l'exemple 3 et celle de l'exemple 4. L'extraction à l'acétate d'ammonium donne les résultats suivants :

| g/kg | | | | | mg/kg | |
|---|---|---|---|---|---|---|
| pH | $P_2O_5$ | $K_2O$ | CaO | MgO | $Fe_2O_3$ | MnO |
| 7,95 | 3,50 | 1,29 | 4,05 | 0,45 | 22,9 | 5,0 |

Ces résultats confirment le rôle joué par l'alumine en tant que régulateur de la capacité d'assimilation par la plante des éléments nutritifs principaux. Avec la teneur en alumine indiquée, on obtient une assimilation par la plante qui convient bien pour une application du matériau en tant que substrat nutritif.

On a par ailleurs réalisé un exemple 6 supplémentaire qui met en évidence que même quand ils contiennent une proportion élevée d'oligo-éléments, les produits vitreux de l'invention n'ont pas un caractère phytotoxique.

Dans cet exemples, les fibres de verre ont la composition suivante :

| | | | |
|---|---|---|---|
| $SiO_2$ | 37,5 % | $Fe_2O_3$ | 6,0 % |
| $P_2O_5$ | 4,0 % | $B_2O_3$ | 0,52 % |
| $K_2O$ | 11,1 % | MnO | 1,4 % |
| CaO | 13,1 % | ZnO | 2,0 % |
| MgO | 2,9 % | CuO | 0,99 % |
| $SO_3$ | 0,1 % | $MoO_3$ | 0,5 % |
| | | $Na_2O$ | 2,0 % |
| | | $Al_2O_3$ | 15,3 % |

On effectue une culture de tomates sur un mélange de 5 g de fibres et de 1500 g de sable fin inerte dont les grains ont un diamètre moyen de 1 mm environ.

Le milieu de culture est alimenté en subirrigation par une solution nutritive complète, telle que celle décrite en relation avec l'exemple témoin 2. On procède de cette façon afin d'accentuer l'effet d'une éventuelle phytotoxicité du verre.

La variété de tomates utilisées est un hybride à croissance déterminée dénommé LUCA. La culture est conduite du semis au stade plantation (pièces florales du premier bouquet bien apparentes), soit environ trois ou quatre jours avant l'épanouissement de la première fleur.

Les résultats suivants sont relatifs au développement végétatif pour l'exemple considéré et un témoin comprenant uniquement 1,5 kg de sable.

| | nombre feuilles | hauteur cm | poids frais (g) | poids sec (g) |
|---|---|---|---|---|
| Exemp. 6 | 10,6 | 46,3 | 76,3 | 5,7 |
| sable | 11,0 | 47,3 | 84,9 | 6,3 |

Il apparait donc que en tant que substrat, les produits de l'invention ne présentent pas de caractère phytotoxique. En d'autres termes, une quantité importante d'oligo-éléments dans le substrat ne peut être à elle seule phytotoxique. Un tel exemple est particulièrement intéressant dans une application comme engrais retard en mettant à profit une faible vitesse de libération des éléments et la possibilité d'en mettre une quantité importante dans le produit sans risque de phytotoxicité.

TABLEAU 1 : Compositions (en pourcentage pondéral)

| Exemple | $SiO_2$ | $P_2O_5$ | $K_2O$ | CaO | MgO | $SO_3$ | $Fe_2O_3$ | $B_2O_3$ | MnO | ZnO | CuO | $MoO_3$ | $Na_2O$ | $Al_2O_3$ |
|---|---|---|---|---|---|---|---|---|---|---|---|---|---|---|
| 1 | 53,30 | 4,60 | 15,90 | 17,40 | 4,90 | 0,30 | 2,0 | 0,60 | 0,22 | 0,25 | 0,10 | 0,07 | 0,08 | 0,10 |
| 2 | 35,40 | 6,30 | 15,50 | 15,10 | 5,20 | 0,20 | 5,0 | 0,60 | 0,21 | 0,22 | 0,12 | 0,07 | 0,02 | 15,10 |
| 3 | 50,70 | 6,70 | 17,20 | 15,30 | 4,80 | 0,10 | 4,0 | 0,11 | 0,14 | 0,32 | 0,10 | 0,03 | 0,05 | 0,10 |
| 4 | 40,80 | 6,60 | 17,0 | 15,30 | 4,90 | 0,10 | 4,0 | 0,12 | 0,14 | 0,2 | 0,10 | 0,03 | 0,10 | 10,0 |
| 5 | 46,10 | 6,50 | 16,80 | 15,30 | 4,90 | 0,10 | 4,0 | 0,12 | 0,14 | 0,23 | 0,09 | 0,03 | 0,07 | 4,90 |

TABLEAU 2 : Analyse des végétaux - Culture en subirrigation

| EXEMP | Type de végétaux | Solut aqueu | K % | Ca % | Mg % | P % | Na % | Fe ppm | Mn ppm | Cu ppm | Mo ppm | B ppm | Zn ppm |
|---|---|---|---|---|---|---|---|---|---|---|---|---|---|
| 1 | feuilles concombre | $HNO_3$ | 4,35 | 4,92 | 1,03 | 0,56 | 0,2 | 36,7 | 235 | 8,6 | 78 | 74 | 5 |
| Témoin 1 | feuilles concombre | Solut nutr. compl | 5,65 | 4,10 | 0,58 | 0,75 | | 77 | 123 | 10,8 | 7 | 7,9 | 75,2 |
| Témoin 2 | Ray Grass | Solut nutr. compl | 5,22 | 0,82 | 0,2 | 0,54 | | 69,7 | 89,7 | 6,9 | 6,2 | 28,5 | 93,7 |
| 2 | Ray Grass | $NH_4NO_3$ | 1,33 | 1,39 | 0,26 | 0,14 | | 8,01 | 77,1 | 17,5 | 23,3 | 28,7 | 173,1 |

## Revendications

1. Substrat pour la culture hors-sol, caractérisé en ce qu'il est constitué par un feutre formé de fibres de verre liées entre elles par un liant organique, la composition des fibres étant :

| | | | | | | | |
|---|---|---|---|---|---|---|---|
| $SiO_2$ | 25 | à 65 | % | $Fe_2O_3$ | 1 | à 15 | % |
| $P_2O_5$ | 1 | à 15 | % | $B_2O_3$ | 0,01 | à 2 | % |
| $K_2O$ | 5 | à 35 | % | MnO | 0,01 | à 3 | % |
| $Na_2O$ | 0 | à 2 | % | ZnO | 0,01 | à 3 | % |
| CaO | 11 | à 35 | % | CuO | 0,01 | à 2 | % |
| MgO | 1 | à 10 | % | $MoO_3$ | 0,01 | à 3 | % |
| $SO_3$ | 0,01 | à 1 | % | $Al_2O_3$ | 0 | à 25 | % |

**2.** Substrat conforme à la revendication 1, caractérisé en ce qu'il contient $Al_2O_3$ à une teneur inférieure à 7 % en poids.

**3.** Substrat conforme à la revendication 1, caractérisé en ce que la composition pondérale est :

| | | | | | | | |
|---|---|---|---|---|---|---|---|
| $SiO_2$ | 40 | à 55 | % | $Fe_2O_3$ | 2 | à 5 | % |
| $P_2O_5$ | 5 | à 8 | % | $B_2O_3$ | 0,1 | à 0,3 | % |
| $K_2O$ | 15 | à 20 | % | MnO | 0,1 | à 0,3 | % |
| $Na_2O$ | 0,1 | à 0,5 | % | ZnO | 0,1 | à 0,3 | % |
| CaO | 13 | à 18 | % | CuO | 0,1 | à 0,2 | % |
| MgO | 4 | à 7 | % | $MoO_3$ | 0,05 | à 0,1 | % |
| $SO_3$ | 0,1 | à 0,3 | % | $Al_2O_3$ | | < 7 | % |

**4.** Substrat conforme à l'une des revendications 1 à 3, caractérisé en ce que les libres ont une surface spécifique de l'ordre de 0,3 $m^2/g$.

**5.** Substrat conforme à l'une des revendications 1 à 4, caractérisé en ce que les libres ont un diamètre moyen compris entre 3 et 9 $\mu m$.

**6.** Substrat pour la culture hors-sol conforme à l'une des revendications précédentes, caractérisé en ce que le liant est une résine phénoplaste et/ou aminoplaste.

**7.** Substrat pour la culture hors-sol conforme à l'une des revendications précédentes, caractérisé en ce que la teneur en liant est comprise entre 2 et 15 % et, de préférence, de 3 à 6 % en poids de fibres.

**8.** Procédé de croissance et de nutrition végétale, utilisant un produit vitreux comprenant, à l'exception de l'azote, tous les éléments minéraux majeurs et mineurs essentiels à la nutrition des plantes et susceptibles d'être prélevés par un système racinaire dans le milieu ambiant, les constituants desdits produits étant en proportions telles que les éléments nutritifs sont solubles et assimilables par les plantes, caractérisé en ce qu'on utilise un produit vitreux sous forme de substrat pour la culture hors-sol constitué par un feutre formé de fibres de verre liées par un liant organique, la composition pondérale des fibres étant :

| | | | | | | | |
|---|---|---|---|---|---|---|---|
| $SiO_2$ | 25 | à 65 | % | $Fe_2O_3$ | 1 | à 15 | % |
| $P_2O_5$ | 1 | à 15 | % | $B_2O_3$ | 0,01 | à 2 | % |
| $K_2O$ | 5 | à 35 | % | MnO | 0,01 | à 3 | % |
| $Na_2O$ | 0 | à 2 | % | ZnO | 0,01 | à 3 | % |
| CaO | 11 | à 35 | % | CuO | 0,01 | à 2 | % |
| MgO | 1 | à 10 | % | $MoO_3$ | 0,01 | à 3 | % |
| $SO_3$ | 0,01 | à 1 | % | $Al_2O_3$ | 0 | à 25 | % |

et en ce qu'on alimente ce substrat en azote.

**9.** Procédé conforme à la revendication 8, caractérisé en ce qu'on utilise un substrat dont les fibres contiennent $Al_2O_3$ à une teneur inférieure à 7 % en poids.

**10.** Procédé conforme à l'une des revendications 8 ou 9, caractérisé en ce que les fibres du substrat ont la composition pondérale suivante :

| | | | | | | | |
|---|---|---|---|---|---|---|---|
| $SiO_2$ | 40 | à 55 | % | $Fe_2O_3$ | 2 | à 5 | % |
| $P_2O_5$ | 5 | à 8 | % | $B_2O_3$ | 0,1 | à 0,3 | % |
| $K_2O$ | 15 | à 20 | % | MnO | 0,1 | à 0,3 | % |
| $Na_2O$ | 0,1 | à 0,5 | % | ZnO | 0,1 | à 0,3 | % |
| CaO | 13 | à 18 | % | CuO | 0,1 | à 0,2 | % |
| MgO | 4 | à 7 | % | $MoO_3$ | 0,05 | à 0,1 | % |
| $SO_3$ | 0,1 | à 18 | % | $Al_2O_3$ | | < 7 | % |

**11.** Procédé conforme à l'une des revendications 8 à 10, caractérisé en ce que les fibres ont une surface spécifique de l'ordre de 0,3 $m^2/g$.

**12.** Procédé conforme à l'une des revendications 8 à 11, caractérisé en ce que les fibres du substrat ont un diamètre moyen compris entre 3 et 9 $\mu m$.

**13.** Procédé conforme à l'une des revendications 8 à 12, caractérisé en ce que l'alimentation se fait par subirrigation à l'aide d'une solution aqueuse azotée.

**14.** Procédé conforme à la revendication 13, caractérisé en ce que la solution azotée a un pH acide, de préférence compris entre 2 et 4.

**15.** Procédé conforme à la revendication 14, caractérisé en ce que la solution azotée est une solution d'acide nitrique.

**16.** Procédé conforme à la revendication 14, caractérisé en ce que la solution est acidifiée par l'acide sulfurique.

**17.** Procédé conforme à l'une des revendications 8 à 16, caractérisé en ce que les fibres de verre constituant le feutre sont liées par une résine phénoplaste et/ou aminoplaste.

**18.** Procédé conforme à la revendication 17, caractérisé en ce que la teneur en liant est comprise entre 2 et 15 % et, de préférence, de 3 à 6 % en poids de fibres.

## Claims

1. A substrate for soilless cultivation, characterised in that it is constituted by a felt formed by glass fibres bonded inter se by an organic binder, the composition of the fibres being as follows:

| | | | |
|---|---|---|---|
| $SiO_2$ | 25 to 65 % | $Fe_2O_3$ | 1 to 15 % |
| $P_2O_5$ | 1 to 15 % | $B_2O_3$ | 0.01 to 2 % |
| $K_2O$ | 5 to 35 % | MnO | 0.01 to 3 % |
| $Na_2O$ | 0 to 2 % | ZnO | 0.01 to 3 % |
| CaO | 11 to 35 % | CuO | 0.01 to 2 % |
| MgO | 1 to 10 % | $MoO_3$ | 0.01 to 3 % |
| $SO_3$ | 0.01 to 1 % | $Al_2O_3$ | 0 to 25 % |

2. A substrate according to Claim 1, characterised in that it contains $Al_2O_3$ the content of which is less than 7% by weight.

3. A substrate according to Claim 1, characterised in that the composition by weight is as follows:

| | | | |
|---|---|---|---|
| $SiO_2$ | 40 to 55 % | $Fe_2O_3$ | 2 to 5 % |
| $P_2O_5$ | 5 to 8 % | $B_2O_3$ | 0.1 to 0.3 % |
| $K_2O$ | 15 to 20 % | MnO | 0.1 to 0.3 % |
| $Na_2O$ | 0.1 to 0.5 % | ZnO | 0.1 to 0.3 % |
| CaO | 13 to 18 % | CuO | 0.1 to 0.2 % |
| MgO | 4 to 7 % | $MoO_3$ | 0.05 to 0.1 % |
| $SO_3$ | 0.1 to 0.3 % | $Al_2O_3$ | $<$ 7 % |

4. A substrate according to one of Claims 1 to 3, characterised in that the fibres have a specific surface area of around 0.3 $m^2/g$.

5. A substrate according to one of Claims 1 to 4, characterised in that the fibres have a mean diameter comprised between 3 and 9 $\mu m$.

6. A substrate for soilless cultivation according to one of the preceding Claims, characterised in that the binder is a phenolic plastic and/or amino plastic resin.

7. A substrate for soilless cultivation according to one of the preceding Claims, characterised in that the binder content is comprised between 2 and 15% and is preferably between 3 and 6% by weight of fibres.

8. A method of vegetable growth and nutrition utilising a vitreous product comprising, with the exception of nitrogen, all the major and minor mineral elements essential to the nutrition of plants and capable of being taken up by a root system from the ambient environment, the constituents of the said products being in such proportions that the nutrient elements are soluble and can be assimilated by the plants, characterised in that a vitreous product is used which takes the form of a substrate for soilless cultivation and which is constituted by a felt formed by glass fibres bonded by an organic binder, the composition by weight of the fibres being as follows:

| | | | | | | | | |
|---|---|---|---|---|---|---|---|---|
| $SiO_2$ | 25 | to 65 | % | | $Fe_2O_3$ | 1 | to 15 | % |
| $P_2O_5$ | 1 | to 15 | % | | $B_2O_3$ | 0.01 | to 2 | % |
| $K_2O$ | 5 | to 35 | % | | MnO | 0.01 | to 3 | % |
| $Na_2O$ | 0 | to 2 | % | | ZnO | 0.01 | to 3 | % |
| CaO | 11 | to 35 | % | | CuO | 0.01 | to 2 | % |
| MgO | 1 | to 10 | % | | $MoO_3$ | 0.01 | to 3 | % |
| $SO_3$ | 0.01 | to 1 | % | | $Al_2O_3$ | 0 | to 25 | % |

and in that this substrate is supplied in nitrogen.

**9.** A method according to Claim 8, characterised in that a substrate is used in which the fibres contain $Al_2O_3$ at a level of below 7% by weight.

**10.** A method according to one of Claims 8 or 9, characterised in that the fibres of the substrate display the following composition by weight:

| | | | | | | | | |
|---|---|---|---|---|---|---|---|---|
| $SiO_2$ | 40 | to 55 | % | | $Fe_2O_3$ | 2 | to 5 | % |
| $P_2O_5$ | 5 | to 8 | % | | $B_2O_3$ | 0.1 | to 0.3 | % |
| $K_2O$ | 15 | to 20 | % | | MnO | 0.1 | to 0.3 | % |
| $Na_2O$ | 0.1 | to 0.5 | % | | ZnO | 0.1 | to 0.3 | % |
| CaO | 13 | to 18 | % | | CuO | 0.1 | to 0.2 | % |
| MgO | 4 | to 7 | % | | $MoO_3$ | 0.05 | to 0.1 | % |
| $SO_3$ | 0.1 | to 18 | % | | $Al_2O_3$ | | $< 7$ | % |

**11.** A method according to one of Claims 8 to 10, characterised in that the fibres have a specific surface area of around 0.3 $m^2$/g.

**12.** A method according to one of Claims 8 to 11, characterised in that the fibres of the substrate have a mean diameter comprised between 3 and 9 $\mu$m.

**13.** A method according to one of Claims 8 to 12, characterised in that feeding is carried out by sub-irrigation employing a nitrogenous aqueous solution.

**14.** A method according to Claim 13, characterised in that the nitrogenous solution has an acid pH, preferably between 2 and 4.

**15.** A method according to Claim 14, characterised in that the nitrogenous solution is a solution of nitric acid.

**16.** A method according to Claim 14, characterised in that the solution is acidified by sulphuric acid.

**17.** A method according to one of Claims 8 to 16, characterised in that the glass fibres of which the felt consists are bonded by a phenolic plastic and/or amino plastic resin.

**18.** A method according to Claim 17, characterised in that the binder content is comprised between 2 and 15% and preferably between 3 and 6% by weight of fibres.

## Patentansprüche

1. Substrat für erdelose Kulturen, dadurch gekennzeichnet, daß es durch einen Filz aus mit einem organischen Bindemittel gebundenen Glasfasern gebildet ist, wobei die Zusammensetzung der Fasern wie folgt ist:

| | | | | | |
|---|---|---|---|---|---|
| $SiO_2$ | 25 bis 65 % | | $Fe_2O_3$ | 1 bis 15 % | |
| $P_2O_5$ | 1 bis 15 % | | $B_2O_3$ | 0,01 bis 2 % | |
| $K_2O$ | 5 bis 35 % | | MnO | 0,01 bis 3 % | |
| $Na_2O$ | 0 bis 2 % | | ZnO | 0,01 bis 3 % | |
| CaO | 11 bis 35 % | | CuO | 0,01 bis 2 % | |
| MgO | 1 bis 10 % | | $MoO_3$ | 0,01 bis 3 % | |
| $SO_3$ | 0,01 bis 1 % | | $Al_2O_3$ | 0 bis 25 % | |

2. Substrat nach Anspruch 1, dadurch gekennzeichnet, daß es $Al_2O_3$ in einem Gehalt von weniger als 7 Gew.-% enthält.

3. Substrat nach Anspruch 1, dadurch gekennzeichnet, daß die gewichtsmäßige Zusammensetzung wie folgt ist:

| | | | |
|---|---|---|---|
| $SiO_2$ | 40 bis 55 % | $Fe_2O_3$ | 2 bis 5 % |
| $P_2O_5$ | 5 bis 8 % | $B_2O_3$ | 0,1 bis 0,3 % |
| $K_2O$ | 15 bis 20 % | MnO | 0,1 bis 0,3 % |
| $Na_2O$ | 0,1 bis 0,5 % | ZnO | 0,1 bis 0,3 % |
| CaO | 13 bis 18 % | CuO | 0,1 bis 0,2 % |
| MgO | 4 bis 7 % | $MoO_3$ | 0,05 bis 0,1 % |
| $SO_3$ | 0,1 bis 0,3 % | $Al_2O_3$ | < 7 % |

4. Substrat nach einem der Ansprüche 1 bis 3, dadurch gekennzeichnet, daß die Fasern eine spezifische Oberfläche in der Größenordnung von 0,3 $m^2/g$ aufweisen.

5. Substrat nach einem der Ansprüche 1 bis 4, dadurch gekennzeichnet, daß die Fasern einen mittleren Durchmesser zwischen 3 und 9 $\mu m$ aufweisen.

6. Substrat für erdelose Kulturen nach einem der vorhergehenden Ansprüche, dadurch gekennzeichnet, daß das Bindemittel ein Phenoplast- und/oder ein Aminoplastharz ist.

7. Substrat für erdelose Kulturen nach einem der vorhergehenden Ansprüche, dadurch gekennzeichnet, daß der Gehalt an Bindemittel zwischen 2 und 15 %, vorzugsweise zwischen 3 und 6 %, bezogen auf das Gewicht der Fasern, liegt.

8. Verfahren zur Aufzucht von Pflanzen unter Verwendung eines glasigen Produktes, welches mit Ausnahme des Stickstoffes alle mineralischen Haupt- und Neben-Nährstoffe für die Pflanze enthält, die durch ein Wurzelsystem im Umgebungsmilieu aufgenommen werden können, wobei die Bestandteile dieser Produkte in solchen Verhältnissen zueinander stehen, daß die Nährstoffe löslich und für die Pflanzen verfügbar sind, dadurch gekennzeichnet, daß ein glasiges Produkt in der Form von Substrat für

erdelose Kulturen verwendet wird, welches durch einen Filz aus mit einem organischen Bindemittel gebundenen Glasfasern gebildet ist, wobei die gewichtsmäßige Zusammensetzung der Fasern

| | | | | | | | |
|---|---|---|---|---|---|---|---|
| $SiO_2$ | 25 | bis 65 | % | $Fe_2O_3$ | 1 | bis 15 | % |
| $P_2O_5$ | 1 | bis 15 | % | $B_2O_3$ | 0,01 | bis 2 | % |
| $K_2O$ | 5 | bis 35 | % | MnO | 0,01 | bis 3 | % |
| $Na_2O$ | 0 | bis 2 | % | ZnO | 0,01 | bis 3 | % |
| CaO | 11 | bis 35 | % | CuO | 0,01 | bis 2 | % |
| MgO | 1 | bis 10 | % | $MoO_3$ | 0,01 | bis 3 | % |
| $SO_3$ | 0,01 | bis 1 | % | $Al_2O_3$ | 0 | bis 25 | % |

entspricht, und daß man dieses Substrat mit Stickstoff anreichert.

**9.** Verfahren nach Anspruch 8, dadurch gekennzeichnet, daß ein Substrat verwendet wird, dessen Fasern $Al_2O_3$ in einem Gehalt von weniger als 7 Gew.-% enthalten.

**10.** Verfahren nach einem der Ansprüche 8 oder 9, dadurch gekennzeichnet, daß die Fasern des Substrates folgende gewichtsmäßige Zusammensetzung aufweisen:

| | | | | | | | |
|---|---|---|---|---|---|---|---|
| $SiO_2$ | 40 | bis 55 | % | $Fe_2O_3$ | 2 | bis 5 | % |
| $P_2O_5$ | 5 | bis 8 | % | $B_2O_3$ | 0,1 | bis 0,3 | % |
| $K_2O$ | 15 | bis 20 | % | MnO | 0,1 | bis 0,3 | % |
| $Na_2O$ | 0,1 | bis 0,5 | % | ZnO | 0,1 | bis 0,3 | % |
| CaO | 13 | bis 18 | % | CuO | 0,1 | bis 0,2 | % |
| MgO | 4 | bis 7 | % | $MoO_3$ | 0,05 | bis 0,1 | % |
| $SO_3$ | 0,1 | bis 18 | % | $Al_2O_3$ | | < 7 | % |

**11.** Verfahren nach einem der Ansprüche 8 bis 10, dadurch gekennzeichnet, daß die Fasern eine spezifische Oberfläche in der Größenordnung von 0,3 $m^2/g$ aufweisen.

**12.** Verfahren nach einem der Ansprüche 8 bis 11, dadurch gekennzeichnet, daß die Fasern des Substrats einen mittleren Durchmesser zwischen 3 und 9 $\mu m$ aufweisen.

**13.** Verfahren nach einem der Ansprüche 8 bis 12, dadurch gekennzeichnet, daß die Anreicherung durch Bewässerung von unten her mit einer stickstoffhaltigen wässrigen Lösung erfolgt.

**14.** Verfahren nach Anspruch 13, dadurch gekennzeichnet, daß die stickstoffhaltige Lösung einen sauren pH-Wert, vorzugsweise zwischen 2 und 4, aufweist.

**15.** Verfahren nach Anspruch 14, dadurch gekennzeichnet, daß die stickstoffhaltige Lösung eine Salpetersäurelösung ist.

**16.** Verfahren nach Anspruch 14, dadurch gekennzeichnet, daß die Lösung mittels Schwefelsäure angesäuert ist.

**17.** Verfahren nach einem der Ansprüche 8 bis 16, dadurch gekennzeichnet, daß die den Filz bildenden

Glasfasern mittels eines Phenoplast- und/oder eines Aminoplastharzes gebunden sind.

**18.** Verfahren nach Anspruch 17, dadurch gekennzeichnet, daß der Gehalt an Bindemittel zwischen 2 und 15 %, vorzugsweise zwischen 3 und 6 %, bezogen auf das Fasergewicht, liegt.